# EUROPEAN PATENT APPLICATION

(11) **EP 4 641 351 A1**
(43) Date of publication of application: **29.10.2025**
(21) Application number: 24766320.6
(22) Date of filing: 29.02.2024
(51) Int. Cl.: G06F 1/3234

(54) **FREQUENCY CONTROL METHOD FOR PROCESSOR, AND ELECTRONIC DEVICE**

(30) Priority: 03.03.2023 CN 202310234823
(71) Applicant: Huawei Technologies Co., Ltd., Shenzhen, Guangdong 518129 (CN)
(72) Inventor: CHEN, Kang, Shenzhen, Guangdong 518129 (CN); QIN, Tian, Shenzhen, Guangdong 518129 (CN); PEI, Yong, Shenzhen, Guangdong 518129 (CN)
(74) Representative: Maiwald GmbH
(86) International application number: PCT/CN2024/079189
(87) International publication number: WO 2024/183598

(57) **Abstract**

Embodiments of this application provide a frequency control method for a processor and an electronic device. The method includes: The electronic device identifies an operating status of a processor of the electronic device when detecting a user operation that indicates to start a first application, where the operating status includes a frequency reducing state and a frequency boosting state. The electronic device adjusts the operating status of the processor to the frequency boosting state when the operating status of the processor is the frequency reducing state. According to this method, it can be ensured that the application is started without freezing, thereby improving user experience.

## Description

This application claims priority to Chinese Patent Application No. 202310234823.X, filed with the China National Intellectual Property Administration on March 3, 2023, and entitled "FREQUENCY CONTROL METHOD FOR PROCESSOR AND ELECTRONIC DEVICE", which is incorporated herein by reference in its entirety.

### TECHNICAL FIELD

This application relates to the field of electronic technologies, and in particular, to a frequency control method for a processor and an electronic device.

### BACKGROUND

Currently, a high temperature burns a processor in an electronic device. When a temperature of the processor reaches a specific value, the electronic device usually triggers a high temperature protection mechanism to protect the processor from being burnt. However, the high temperature protection mechanism affects normal running of the electronic device (such as a computer). An existing high temperature protection mechanism includes shutdown, restart, or reduced frequency of a processor when a temperature is excessively high.

Frequency reduction of the processor causes a reduced processing speed of the processor, thereby affecting user experience. In a scenario in which a user uses a computer, if a frequency of a central processing unit (central processing unit, CPU) of the computer is reduced, when the user starts an application, a problem such as freezing or delay of the application occurs, affecting user experience. For example, it takes 1 second for the CPU of the computer to process a piece of data. After the frequency of the CPU is reduced, it takes 10 seconds for the CPU to process the data. Slow data processing causes the computer to freeze. As a temperature continues to rise, the frequency of the CPU is continuously reduced until the computer experiences a false death, which is a commonly seen case in which a mouse can be operated but nothing else responds. When the temperature reaches a highest temperature of a high temperature protection mechanism of the CPU, the computer may shut down or restart.

### SUMMARY

Embodiments of this application disclose a frequency control method for a processor and an electronic device. In embodiments of this application, when detecting a user operation that indicates to start an application, the electronic device may identify whether a processor of the electronic device is currently in a frequency reducing state. Further, if the processor is in the frequency reducing state, the electronic device boosts a frequency of the processor. According to this method, it can be ensured that the application is started without freezing, thereby improving user experience.

According to a first aspect, an embodiment of this application discloses a frequency control method for a processor. The method includes the following steps:
An electronic device identifies an operating status of a processor of the electronic device when detecting a user operation that indicates to start a first application, where the operating status includes a frequency reducing state and a frequency boosting state.

The electronic device adjusts the operating status of the processor to the frequency boosting state when the operating status of the processor is the frequency reducing state.

In embodiments of this application, when detecting a user operation that indicates to start an application, the electronic device may identify whether the processor of the electronic device is currently in the frequency reducing state. Further, if the processor is in the frequency reducing state, the electronic device boosts a frequency of the processor. According to this method, it can be ensured that the application is started without freezing, thereby improving user experience.

The frequency reducing state may be a state in which the frequency of the processor is continuously reduced, or may be a state in which the frequency of the processor is lower than a first preset frequency. The frequency boosting state may be a state in which the frequency of the processor is continuously increasing, or may be a state in which the frequency of the processor is higher than a second preset frequency. The first preset frequency and the second preset frequency may be the same, or may be different.

With reference to the first aspect, in a possible implementation, the method further includes:
The electronic device executes a temperature control policy, where the temperature control policy includes a thermal zone parameter, and the temperature control policy is to adjust the operating status of the processor to the frequency reducing state when a thermal zone temperature of the processor reaches the thermal zone parameter.

Adjusting the operating status of the processor to the frequency boosting state includes: The electronic device adjusts a value of the thermal zone parameter from a first threshold to a second threshold, where the second threshold is greater than the first threshold. The electronic device adjusts the operating status of the processor to the frequency boosting state when detecting that the thermal zone parameter is adjusted to the second threshold.

In this embodiment of this application, the electronic device executes the temperature control policy. The temperature control policy includes the thermal zone parameter, and the temperature control policy is to adjust the operating status of the processor to the frequency reducing state when the thermal zone temperature of the processor reaches the thermal zone parameter. The electronic device identifies the operating status of the processor of the electronic device when detecting the user operation that indicates to start the first application, and adjusts the operating status of the processor to the frequency boosting state when the operating status of the processor is the frequency reducing state. According to this method, when the operating status of the electronic device is the frequency reducing state due to an excessively high temperature of the processor, freezing of an application can be avoided when a user starts the application.

With reference to the first aspect, in a possible implementation, the value of the thermal zone parameter is adjusted by using a basic input/output system BIOS in the electronic device.

With reference to the first aspect, in a possible implementation, before adjusting the value of the thermal zone parameter from the first threshold to the second threshold, the method further includes:
The electronic device sends a first notification to the BIOS through a frequency boosting interface when detecting the user operation by using a second application, where the first notification indicates an advanced configuration and power interface ACPI in the BIOS to adjust the thermal zone parameter.

With reference to the first aspect, in a possible implementation, the operating status of the processor is adjusted by using a temperature control driver in the electronic device.

With reference to the first aspect, in a possible implementation, after adjusting the operating status of the processor to the frequency boosting state, the method further includes:
The electronic device adjusts the value of the thermal zone parameter from the second threshold to the first threshold after a preset time.

In this embodiment of this application, the electronic device boosts the frequency of the processor within a time period after the application is started, and restores to a previous reduced frequency after the preset time. According to this method, it can be ensured that the application is started without freezing, and a potential risk caused by an excessively high temperature of the processor can be avoided.

With reference to the first aspect, in a possible implementation, that the electronic device adjusts the value of the thermal zone parameter from the second threshold to the first threshold after the preset time includes:
The electronic device sends a second notification to an embedded controller EC by using the BIOS when adjusting the value of the thermal zone parameter from the first threshold to the second threshold, where the second notification includes the preset time, and the second notification indicates the EC to adjust the thermal zone parameter from the second threshold to the first threshold after the preset time.

The electronic device sends an instruction to the BIOS by using the EC after the preset time, where the instruction indicates the BIOS to adjust the thermal zone parameter from the second threshold to the first threshold.

The electronic device reduces an operating frequency of the processor when detecting, by using the temperature control driver, that the thermal zone parameter is adjusted to the first threshold.

With reference to the first aspect, in a possible implementation, adjusting the operating status of the processor to the frequency boosting state includes:
The electronic device adjusts the operating status of the processor to the frequency boosting state when detecting that a safety compliance parameter of the electronic device is within a preset range, where the safety compliance parameter includes at least one of a battery voltage and a temperature.

In this embodiment of this application, when the electronic device boosts the frequency of the processor, a value of the safety compliance parameter is considered, thereby ensuring safety of the user while using the electronic device.

With reference to the first aspect, in a possible implementation, the method further includes:
The electronic device obtains a safety compliance scenario identifier from the EC by using the BIOS after the BIOS receives a third notification, where the third notification indicates the BIOS to adjust the thermal zone parameter.

The electronic device determines that the safety compliance parameter of the electronic device is within the preset range when determining, by using the BIOS, that the safety compliance scenario identifier is a preset identifier.

With reference to the first aspect, in a possible implementation, an operating frequency that is of the processor and that is occupied when the first application is running is higher than a preset frequency.

The operating frequency that is of the processor and that is occupied when the first application is running may be a processor resource occupied by the first application.

In this embodiment of this application, the electronic device may identify the operating status of the processor only when the application occupies a large quantity of processor resources, and boost the frequency of the processor when the processor is in the frequency reducing state. When the processor is in the frequency reducing state, freezing is more likely to occur when an application that occupies a large quantity of processor resources is started. According to this method, boosting the frequency of the processor may be avoided when an application is started without freezing, so that power consumption can be reduced, and the temperature of the processor can be properly controlled, thereby ensuring user experience and safety.

According to a second aspect, this application provides an electronic device. The electronic device may include a memory and a processor. The memory may be configured to store a computer program. The processor may be configured to invoke the computer program, so that the electronic device is enabled to perform the method according to any one of the first aspect or the possible implementations of the first aspect.

According to a third aspect, an embodiment of this application further provides a chip system. The chip system includes at least one processor and a communication interface. The communication interface is configured to send and/or receive data, and the at least one processor is configured to invoke a computer program stored in at least one memory, so that an apparatus in which the chip system is located implements the method according to any one of the first aspect or the possible implementations of the first aspect.

According to a fourth aspect, an embodiment of this application discloses a computer-readable storage medium. The computer-readable storage medium stores a computer program. When the computer program is run on one or more processors, the method according to any one of the first aspect or the possible implementations of the first aspect is performed.

According to a fifth aspect, an embodiment of this application discloses a computer program product. When the computer program product runs on one or more processors, the method according to any one of the first aspect or the possible implementations of the first aspect is performed.

### BRIEF DESCRIPTION OF DRAWINGS

The following describes accompanying drawings used in embodiments of this application.
FIG. 1 is a diagram of a structure of an example PC 100 according to an embodiment of this application;
FIG. 2 is a diagram of a software architecture of a PC 100 according to an embodiment of this application;
FIG. 3 is a frequency control method for a processor according to an embodiment of this application;
FIG. 4 is a frequency control method for another processor according to an embodiment of this application; and
FIG. 5A and FIG. 5B are a flowchart of BIOS and EC processing according to an embodiment of this application.

### DESCRIPTION OF EMBODIMENTS

The following describes embodiments of this application with reference to the accompanying drawings in embodiments of this application. It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise specified, ordinal numbers such as "first" and "second" in embodiments of this application are used to distinguish between a plurality of objects, but are not intended to limit an order, a time sequence, priorities, or degrees of importance of the plurality of objects. For example, first information and second information are merely used to distinguish between different information, but do not indicate that the two types of information are different in content, priorities, sending sequences, degrees of importance, or the like.

First, a frequency control method for a processor in a conventional technology is described as an example.

Currently, in a technical solution combining a Qualcomm CPU and a Windows operating system, when a temperature of the CPU rises to a thermal wall (that is, a preset temperature) of the CPU, an operating frequency of the CPU is reduced.

Operating frequency reduction of the CPU leads to a reduced processing speed of the CPU. In this case, if a user starts an application that occupies a large amount of CPU (that is, occupies high CPU resources), freezing occurs, affecting user experience.

Embodiments of this application provide a frequency control method for a processor, an electronic device, and a system. In the method, when detecting a user operation that indicates to start an application, the electronic device may identify whether a processor of the electronic device is currently in a frequency reducing state. Further, if the processor is in the frequency reducing state, the electronic device boosts a frequency of the processor within a time period after the application is started, and restores to a previous reduced frequency after a preset time. According to this method, it can be ensured that the application is started without freezing, thereby improving user experience.

The electronic device may be specifically a tablet computer, a desktop computer, a laptop computer, a handheld computer, a notebook computer, an ultra-mobile personal computer (ultra-mobile personal computer, UMPC), a netbook, or the like. An example embodiment of the electronic device includes but is not limited to a portable electronic device that carries Windows^{®}, Linux, or another operating system. The electronic device may alternatively be another portable electronic device, such as a laptop (Laptop) computer. It should be further understood that, in some other embodiments, the electronic device may not be a portable electronic device but a desktop computer.

The following describes an example of an electronic device provided in an embodiment of this application.

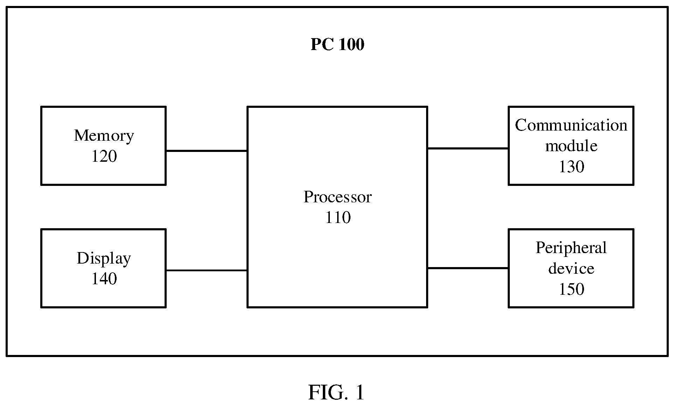

FIG. 1 is a diagram of a structure of an example PC 100 according to an embodiment of this application. For example, the electronic device in this embodiment of this application may be the PC 100.

It may be understood that a structure of the example PC 100 in this embodiment of this application does not constitute a specific limitation on the electronic device. In some other embodiments of this application, the PC 100 may include more or fewer components than those shown in the figure, or combine some components, or split some components, or have different component arrangements. The components shown in FIG. 1 may be implemented by hardware, software, or a combination of software and hardware.

As shown in FIG. 1, the PC 100 includes a processor 110, a memory 120, a communication module 130, a display 140, a peripheral device 150, and the like.

The processor 110 may include one or more processing units, and the processor 110 may be configured to control and manage an action of the PC 100. For example, the processor 110 may include a CPU, an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a neural center and a command center of the PC 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to a touch sensor K, a charger, a flash, a camera, and the like through different I2C bus interfaces. For example, the processor 110 may be coupled to the touch sensor K through the I2C interface, so that the processor 110 communicates with the touch sensor K through the I2C bus interface, to implement a touch function of the PC 100.

The I2S interface may be configured to perform audio communication. In some embodiments, the processor 110 may include a plurality of groups of I2S buses. The processor 110 may be coupled to an audio module through the I2S bus, to implement communication between the processor 110 and the audio module. In some embodiments, the audio module may transmit an audio signal to a wireless communication module through the I2S interface, to implement a function of answering a call through a Bluetooth headset.

The PCM interface may also be used to perform audio communication, and sample, quantize, and code an analog signal. In some embodiments, the audio module may be coupled to the wireless communication module through a PCM bus interface. In some embodiments, the audio module may alternatively transmit an audio signal to the wireless communication module through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module. For example, the processor 110 communicates with a Bluetooth module in the wireless communication module through the UART interface, to implement a Bluetooth function. In some embodiments, the audio module may transmit an audio signal to the wireless communication module through the UART interface, to implement a function of playing music through a Bluetooth headset.

The MIPI interface may be configured to connect the processor 110 to a peripheral component such as a display or the camera. The MIPI interface includes a camera serial interface (camera serial interface, CSI), a display serial interface (display serial interface, DSI), and the like. In some embodiments, the processor 110 communicates with the camera through the CSI interface, to implement an image shooting function of the PC 100. The processor 110 communicates with the display through the DSI interface, to implement a display function of the PC 100.

The GPIO interface may be configured by software. The GPIO interface may be configured as a control signal or a data signal. In some embodiments, the GPIO interface may be configured to connect the processor 110 to the camera, the display, the wireless communication module, the audio module, the sensor module, or the like. The GPIO interface may alternatively be configured as an I2C interface, an I2S interface, a UART interface, an MIPI interface, or the like.

The SIM card interface may be configured to communicate with the SIM card interface, to implement a function of transmitting data to an SIM card or reading data in the SIM card.

The USB interface is an interface that conforms to a USB standard specification, and may be specifically a mini USB interface, a micro USB interface, a USB type-C interface, or the like. The USB interface may be configured to connect to a charger to charge the PC 100, or may be configured to transmit data between the PC 100 and a peripheral device, or may be configured to connect to a headset for playing audio through the headset. The interface may be further configured to connect to another electronic device such as an AR device.

It may be understood that an interface connection relationship between the modules shown in this embodiment of this application is merely used as an example for description, and does not constitute a limitation on the structure of the PC 100. In some other embodiments of this application, the PC 100 may alternatively use an interface connection manner different from that in the foregoing embodiment, or a combination of a plurality of interface connection manners.

The memory 120 is configured to store program code and data.

The communication module 130 may be used for communication between the internal modules of the PC 100, communication between the PC 100 and another external device, or the like.

For example, if the PC 100 communicates with another electronic device in a wired connection manner, the communication module 130 may include an interface, for example, a USB interface. Alternatively, the communication module 130 may include an audio component, a radio frequency circuit, a Bluetooth chip, a wireless fidelity (wireless fidelity, Wi-Fi) chip, a near field communication (near field communication, NFC) module, and the like, and may implement interaction between the PC 100 and another electronic device.

The display 140 is configured to display an image, a video, and the like.

The PC 100 implements a display function by using the GPU, the display 140, the application processor, and the like. The GPU is a microprocessor for image processing, and is connected to the display 140 and the application processor. The GPU is configured to: perform mathematical and geometric computation, and render an image. The processor 110 may include one or more GPUs, which execute program instructions to generate or change display information.

The display 140 is configured to display an image, a video, and the like. The display 140 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like.

The PC 100 may implement an image shooting function by using the ISP, the camera, the video codec, the GPU, the display 140, the application processor, and the like.

The ISP is configured to process data fed back by the camera. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scene. In some embodiments, the ISP may be disposed in the camera.

The camera is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the PC 100 may include one or N cameras, where N is a positive integer greater than 1.

The digital signal processor is configured to process a digital signal, and may process another digital signal in addition to the digital image signal. For example, when the PC 100 selects a frequency, the digital signal processor is configured to perform Fourier transformation on frequency energy.

The video codec is configured to compress or decompress a digital video. The PC 100 may support one or more video codecs. In this way, the PC 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, with reference to a transfer mode between human brain neurons, and may further continuously perform self-learning. Applications such as an intelligent cognition of the PC 100 may be implemented by using the NPU, such as image recognition, facial recognition, speech recognition, and text understanding.

The peripheral device 150 may include a mouse, a keyboard, a loudspeaker, a microphone, and the like.

The PC 100 may further include a wireless communication module, a charging management module, a power management module, a battery, a module, a speaker, a receiver, a microphone, a headset jack, a sensor module, an indicator, a camera, a display, and the like. The sensor module may include a pressure sensor, a distance sensor, a fingerprint sensor, and the like.

The wireless communication module may provide a wireless communication solution that is applied to the PC 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module may be one or more components that integrate at least one communication processing module. The wireless communication module receives an electromagnetic wave through an antenna, performs frequency modulation and filtering on an electromagnetic wave signal, and sends a processed signal to the processor 110. The wireless communication module may further receive a to-be-sent signal from the processor 110, perform frequency modulation and amplification on the to-be-sent signal, and convert the signal into an electromagnetic wave for radiation through the antenna.

The pressure sensor is configured to sense a pressure signal, and can convert the pressure signal into an electrical signal.

In some embodiments, the pressure sensor may be disposed on the display 140. There are many types of pressure sensors such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The PC 100 determines pressure intensity based on the change of the capacitance. When a touch operation is performed on the display 140, the PC 100 detects strength of the touch operation by using the pressure sensor. The PC 100 may also calculate a touch position based on a detection signal of the pressure sensor. In some embodiments, touch operations that are performed in a same touch position but have different touch operation intensity may correspond to different operation instructions.

The distance sensor is configured to measure a distance. The PC 100 may measure the distance through infrared light or laser. In some embodiments, in an image shooting scene, the PC 100 may measure a distance by using the distance sensor to implement quick focusing.

The fingerprint sensor is configured to collect a fingerprint. The display 140 may implement fingerprint unlocking and the like by using a feature of the collected fingerprint.

A button includes a power button and the like. The button may be a mechanical button, or may be a touch button. The PC 100 may receive a button input, and generate a button signal input related to a user setting and function control of the PC 100.

The indicator may be an indicator light, may be configured to indicate a charging status and a power change, or may be configured to synthesize a request, a notification, and the like.

The PC 100 may implement an audio function, for example, music playing and recording, through the audio module, the speaker, the microphone, the headset jack, the application processor, and the like.

The audio module is configured to convert digital audio information into an analog audio signal for output, and is further configured to convert an analog audio input into a digital audio signal. The audio module may be further configured to encode and decode an audio signal. In some embodiments, the audio module may be disposed in the processor 110, or some functional modules in the audio module are disposed in the processor 110.

The speaker, also referred to as a "loudspeaker", is configured to convert an audio electrical signal into a sound signal. The PC 100 may be used to listen to music or answer a call in a hands-free mode by using the speaker.

The microphone, also referred to as a "mike", is configured to convert a sound signal into an electrical signal. When recording voice information, the user may make a sound by approaching the microphone, and input a sound signal to the microphone. At least one microphone may be disposed in the PC 100. In some other embodiments, two microphones may be disposed in the PC 100, to collect a sound signal and further implement a noise reduction function. In some other embodiments, three, four, or more microphones may alternatively be disposed in the PC 100, to collect a sound signal, reduce noise, identify a sound source, implement a directional recording function, and the like.

The headset jack is configured to connect to a wired headset. The headset jack may be a USB interface, or may be a 3.5 mm open mobile electronic device platform (open mobile terminal platform, OMTP) standard interface, or a cellular telecommunications industry association of the USA (cellular telecommunications industry association of the USA, CTIA) standard interface.

In this embodiment of this application, the processor 110 may execute computer-executable instructions stored in the memory 120, so that the PC 100 performs the frequency control method for a processor provided in embodiments of this application.

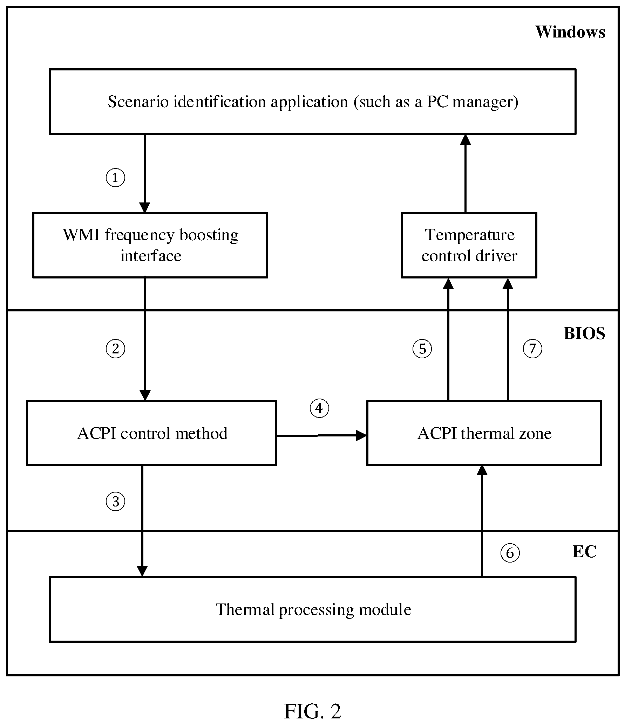

FIG. 2 is a diagram of a software architecture of a PC 100 according to an embodiment of this application. In FIG. 2, Windows is used as an example for description.

As shown in FIG. 2, Windows may include a plurality of applications, a plurality of interfaces, and a plurality of drivers. The plurality of applications may include a scenario identification application (such as a PC manager), the plurality of interfaces may include a management instrumentation (Windows Management Instrumentation, WMI) frequency boosting interface, and the plurality of drivers may include a temperature control driver. The plurality of applications may further include a first application described below. The scenario identification application identifies a user operation on the first application, and notifies a BIOS by using the WMI frequency boosting interface when the user operation on the first application is detected. The temperature control driver is used to adjust an operating frequency of a processor of the PC 100.

The BIOS includes an advanced configuration and power interface (Advanced Configuration and Power Interface, ACPI) control method (Method) and an ACPI thermal zone (ACPI Thermal Zone). The ACPI control method is used to adjust a temperature control policy of the ACPI thermal zone, and specifically, may be used to adjust a thermal design parameter in the temperature control policy.

An EC includes a thermal processing module (EC Thermal Zone). The EC thermal zone is used to receive a notification from the ACPI control method, and indicate, after a preset time based on the notification, the BIOS to modify the thermal design parameter.

For example, for roles of the foregoing modules in FIG. 2 in performing the frequency control method for a processor provided in this application, refer to the following steps (1) to (4):
(1) The PC manager identifies a scenario in which a trustlisted application is started and notifies the BIOS through the WMI frequency boosting interface (①).
(2) The temperature control policy of the ACPI thermal zone is modified by using the ACPI control method (②->④->⑤).
(3) After the temperature control policy is modified by using the ACPI control method, the temperature control driver invokes a thermal zone (Thermal Zone) interface to boost an operating frequency of a CPU to a maximum frequency (or preset frequency), and then, the EC is notified by using the ACPI control method to restore the temperature control policy after 10s (③).
(4) After 10s, the EC sends an instruction (Q-event) to restore the temperature control policy (⑥->⑦).

It should be understood that, in this embodiment of this application, restoration to the frequency reducing state by using the EC is considered for safe frequency boosting. Restoration to the reduced frequency may alternatively be achieved through the WMI frequency boosting interface in the PC manager. However, in this case, the following problem exists: After the user boosts a frequency, if the PC manager is uninstalled, restoration to the frequency reducing state cannot be achieved, posing a safety risk. However, restoration to the frequency reducing state by using the EC is not affected by external factors.

For a specific implementation process, refer to related descriptions below. Details are not described herein.

The following describes in detail a frequency control method for a processor provided in an embodiment of this application.

It should be noted that in this embodiment of this application, a user operation may be a touch operation (for example, a tap operation, a touch and hold operation, a slide-up operation, a slide-down operation, or a side-slide operation) of a user, or may be a non-contact operation (for example, an air gesture or a mouse operation), or may be a voice instruction of a user. This is not specifically limited in embodiments of this application. For ease of description, the following embodiments are described by using a touch operation of a user as an example.

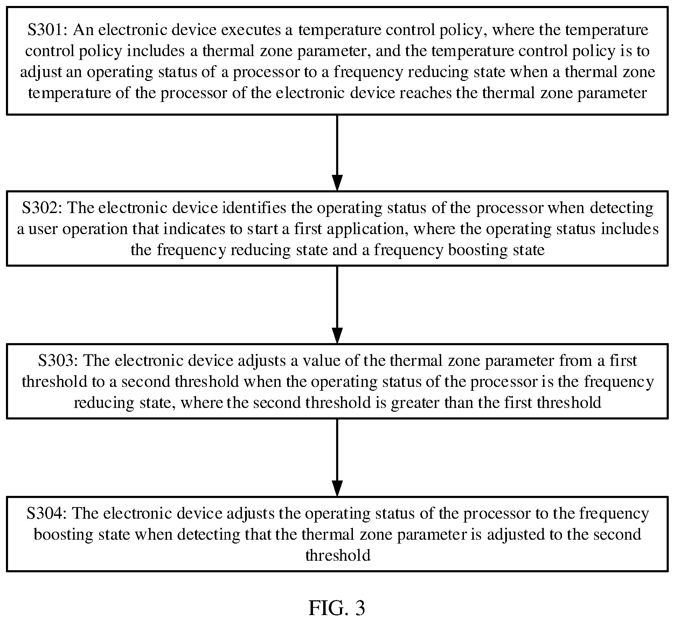

FIG. 3 is a frequency control method for a processor according to an embodiment of this application. The method may include some or all of the following steps.

Step S301: An electronic device executes a temperature control policy, where the temperature control policy includes a thermal zone parameter, and the temperature control policy is to adjust an operating status of a processor to a frequency reducing state when a thermal zone temperature of the processor of the electronic device reaches the thermal zone parameter.

In some embodiments, the electronic device executes the temperature control policy. To be specific, the electronic device may detect the thermal zone temperature of the processor of the electronic device in real time or periodically. Further, when the thermal zone temperature reaches the thermal zone parameter, the operating status of the processor is adjusted to the frequency reducing state; or when the thermal zone temperature is lower than the thermal zone parameter, the operating status of the processor is adjusted to a frequency boosting state.

The thermal zone temperature is a value that represents a temperature status of the processor. For example, the value may be obtained by detecting temperatures of some regions on the processor, or may be obtained through calculation based on temperatures of some or all regions on the processor. This is not limited herein.

It should be understood that the thermal zone parameter and the thermal zone temperature are examples provided in this embodiment of this application for ease of description. In another embodiment of this application, the thermal zone parameter may also be referred to as a thermal zone (Thermal Zone) thermal design parameter. This is not limited herein.

The operating status of the processor may include the frequency boosting state and the frequency reducing state. The frequency boosting state may be a state in which an operating frequency of the processor is continuously boosted or boosted a plurality of times in a preset time. The frequency reducing state may be a state in which an operating frequency of the processor is continuously reduced or reduced a plurality of times in a preset time.

For example, the processor of the electronic device may be a central processing unit (central processing unit, CPU) of the electronic device. The operating frequency of the CPU may be a clock frequency of the CPU, and the clock frequency is an operating frequency of the CPU during an operation, measured in Hz. It may be understood that, the operating frequency of the CPU, namely, a CPU frequency, may affect a running speed of the electronic device.

Step S302: The electronic device identifies the operating status of the processor when detecting a user operation that indicates to start a first application, where the operating status includes the frequency reducing state and the frequency boosting state.

In some embodiments, the electronic device may preset a frequency boosting trustlist, and the frequency boosting trustlist includes a plurality of applications. An application in the frequency boosting trustlist is the first application. The electronic device identifies the operating status of the processor when detecting a user operation that indicates to start the application in the frequency boosting trustlist.

For example, the frequency boosting trustlist includes a game application. The electronic device displays an application icon of the game application. When the user taps the application icon, and the electronic device identifies, when detecting a user operation of tapping the application icon by the user, that an application corresponding to the application icon is an application in the frequency boosting trustlist, the electronic device identifies the operating status of the processor.

It should be understood that applications in the frequency boosting trustlist may be fixed, or may be increased or decreased. A quantity of the applications in the frequency boosting trustlist is not limited in embodiments of this application.

The first application may be an application that causes the operating frequency of the processor to be higher than a preset frequency. In other words, the first application occupies a large quantity of processor resources.

Starting the first application may be running the first application. For example, the electronic device is a computer, and the user taps an application icon of a game application by using a mouse. It is assumed that the game application is the first application. The computer identifies the operating status of the processor in response to a user operation on the application icon, and runs the first application.

Step S303: The electronic device adjusts a value of the thermal zone parameter from a first threshold to a second threshold when the operating status of the processor is the frequency reducing state, where the second threshold is greater than the first threshold.

In some embodiments, when the electronic device identifies that the operating status of the processor is the frequency reducing state when detecting the user operation that indicates to start the first application, the electronic device may adjust the value of the thermal zone parameter from the first threshold to the second threshold, where the second threshold is greater than the first threshold.

It may be understood that, in the temperature control policy, when the thermal zone temperature of the processor reaches the thermal zone parameter, the operating status of the processor is the frequency reducing state. Considering that when the user starts an application that occupies high CPU resources in this case, the electronic device may increase the value of the thermal zone parameter. Therefore, based on the temperature control policy, when the thermal zone temperature of the processor does not reach the thermal zone parameter, the operating status of the processor is not the frequency reducing state. In other words, the operating frequency of the processor is boosted to avoid freezing occurring when the user starts the application.

Step S304: The electronic device adjusts the operating status of the processor to the frequency boosting state when detecting that the thermal zone parameter is adjusted to the second threshold.

In some embodiments, when the electronic device identifies that the operating status of the processor is the frequency reducing state when detecting the user operation that indicates to start the first application, the electronic device may adjust the value of the thermal zone parameter from the first threshold to the second threshold, where the second threshold is greater than the first threshold. Further, the electronic device adjusts the operating status of the processor to the frequency boosting state when detecting that the thermal zone parameter is adjusted to the second threshold.

It may be understood that, based on the temperature control policy, when the thermal zone temperature of the processor is greater than the thermal zone parameter whose value is the first threshold, the processor is currently in the frequency reducing state. Therefore, the electronic device may increase the thermal zone parameter to the second threshold. In this case, based on the temperature control policy, because the thermal zone temperature is not greater than the thermal zone parameter, the operating status of the processor is no longer in the frequency reducing state. This avoids poor user experience caused by the first application freezing when the electronic device starts the first application.

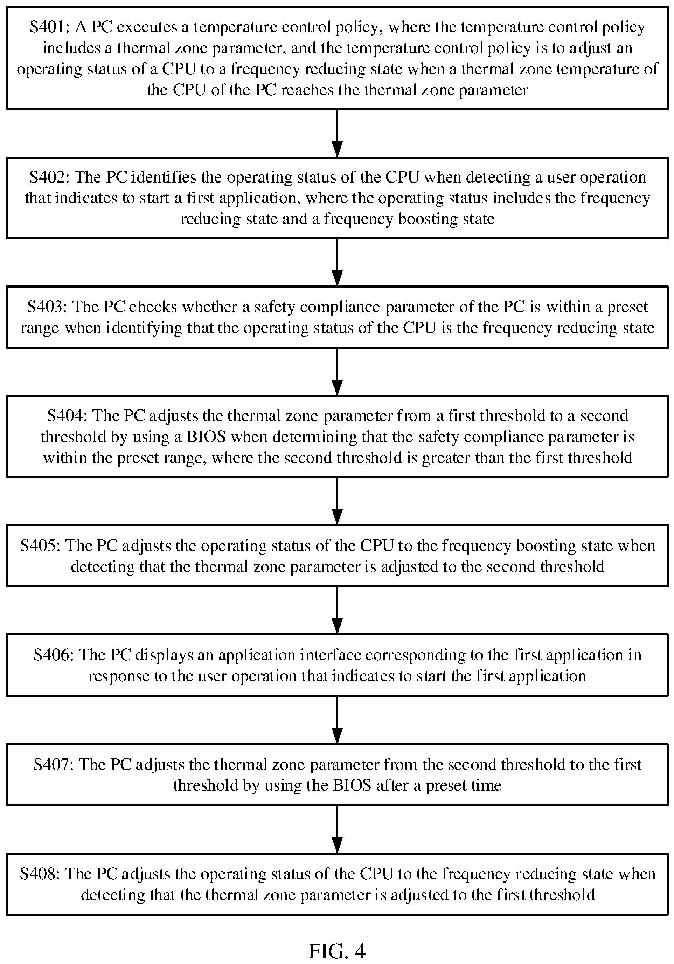

FIG. 4 is a frequency control method for another processor according to an embodiment of this application. The method may include some or all of the following steps.

Step S401: A PC executes a temperature control policy, where the temperature control policy includes a thermal zone parameter, and the temperature control policy is to adjust an operating status of a CPU to a frequency reducing state when a thermal zone temperature of the CPU of the PC reaches the thermal zone parameter.

In some embodiments, the PC may adjust the operating frequency of the CPU based on the thermal zone temperature of the CPU by using a temperature control policy and a temperature control driver of an ACPI thermal zone.

Step S402: The PC identifies the operating status of the CPU when detecting a user operation that indicates to start a first application, where the operating status includes the frequency reducing state and a frequency boosting state.

In some embodiments, the PC may identify, by using a scenario identification application in the Windows operating system, whether there is the user operation of starting the first application; and identify the operating status of the CPU when detecting, by using the scenario identification application, the user operation that indicates to start the first application.

Step S403: The PC checks whether a safety compliance parameter of the PC is within a preset range when identifying that the operating status of the CPU is the frequency reducing state.

The safety compliance parameter may include a battery voltage, a temperature, and the like. The safety compliance parameter may be an original design variable parameter (ODM Design Variables Parameter, ODVP).

In some embodiments, when detecting, by using the scenario identification application, the user operation that indicates to start the first application, the PC may invoke, by using the Windows operating system, a WMI frequency boosting interface to indicate a BIOS to obtain, from the EC side, whether to trigger a safety compliance scenario. When receiving, by using the EC, an obtaining instruction sent by the BIOS, the PC may: detect each ODVP by using the EC; determine, by using the EC and based on each ODVP, whether to trigger the safety compliance scenario; set a safety compliance scenario flag to 1 when determining, by using the EC, that the safety compliance scenario is currently triggered; or set a safety compliance scenario flag to 0 when determining, by using the EC, that the safety compliance scenario is not triggered; and send the safety compliance scenario flag to the BIOS by using the EC.

The PC may compare the safety compliance parameter such as the battery voltage or the temperature with the preset range of each safety compliance parameter by using the EC, to determine whether the safety compliance scenario is currently triggered. For example, when one or more values of the safety compliance parameter are not within the preset range corresponding to the safety compliance parameter, it may be determined that the safety compliance scenario is triggered.

Step S404: The PC adjusts the thermal zone parameter from a first threshold to a second threshold by using the BIOS when determining that the safety compliance parameter is within the preset range, where the second threshold is greater than the first threshold.

In some embodiments, when receiving, by using the BIOS, a safety compliance scenario flag of 0, the PC may determine that the safety compliance scenario is not triggered currently, and modify the thermal zone parameter. Specifically, the thermal zone parameter may be adjusted from the first threshold to the second threshold by using the BIOS, where the second threshold is greater than the first threshold.

In some other embodiments, when receiving, by using the BIOS, a safety compliance scenario flag of 1, the PC may determine that the safety compliance scenario is currently triggered, and end an operation. It should be understood that before boosting a frequency of the CPU, the PC may obtain, from the EC by using the BIOS, whether the safety compliance scenario is currently triggered. If the BIOS determines that the safety compliance scenario has been triggered, an operation of disabling thermal control does not need to be performed, so that a safety accident can be avoided.

Step S405: The PC adjusts the operating status of the CPU to the frequency boosting state when detecting that the thermal zone parameter is adjusted to the second threshold.

In some embodiments, the PC may invoke a thermal zone interface by using the temperature control driver, to boost the CPU frequency to a maximum frequency (or a preset frequency).

Step S406: The PC displays an application interface corresponding to the first application in response to the user operation that indicates to start the first application.

It should be noted that there is no sequence between a process of performing step S406 and a process of performing step S402 to step S405 by the PC. In other words, the PC may simultaneously perform step S402 to step S405 and step S406 in response to the user operation that indicates to start the first application. It should be understood that, step S402 to step S405 may be completed in shorter time. Therefore, the operating frequency of the CPU may be boosted in a process in which the PC displays the application interface corresponding to the first application, to ensure that the user does not visually perceive freezing when starting the first application.

Step S407: The PC adjusts the thermal zone parameter from the second threshold to the first threshold by using the BIOS after a preset time.

In some embodiments, after modifying the thermal zone parameter by using the BIOS, the PC may notify, by using the BIOS, the EC to prepare to restore the thermal zone parameter. The notification may include the preset time (for example, 10s). For example, the PC sends an instruction (Q-event) to the BIOS by using the EC after 10s, where the instruction indicates to restore the temperature control policy, that is, adjust the thermal zone parameter from the second threshold to the first threshold.

Step S408: The PC adjusts the operating status of the CPU to the frequency reducing state when detecting that the thermal zone parameter is adjusted to the first threshold.

In some embodiments, the PC may invoke the thermal zone (Thermal Zone) interface by using the temperature control driver, to reduce the CPU frequency.

The following describes, with reference to the software module shown in FIG. 2, the frequency control method for a processor provided in embodiments of this application.

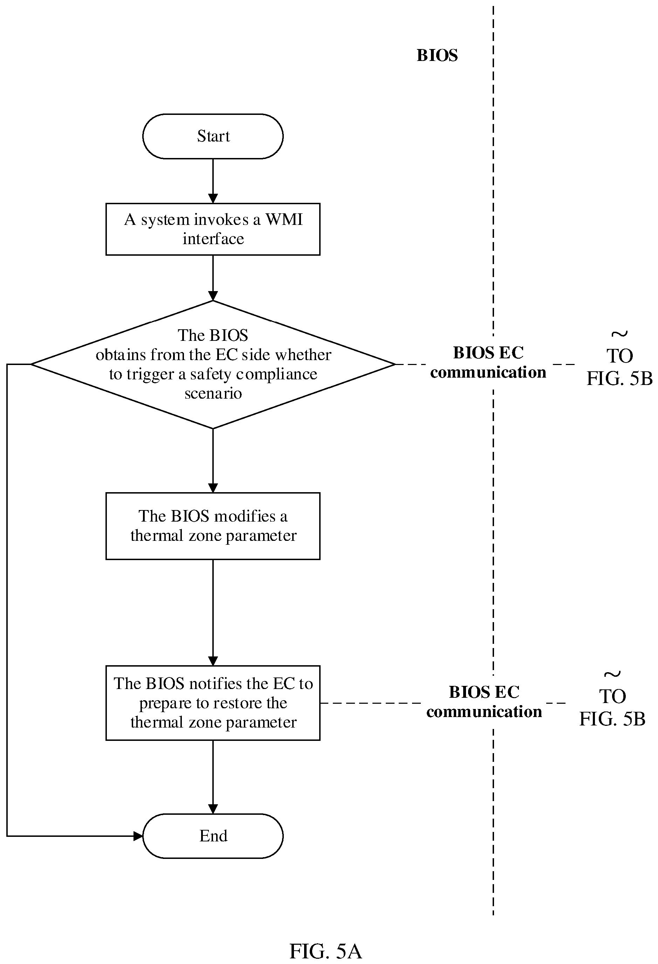

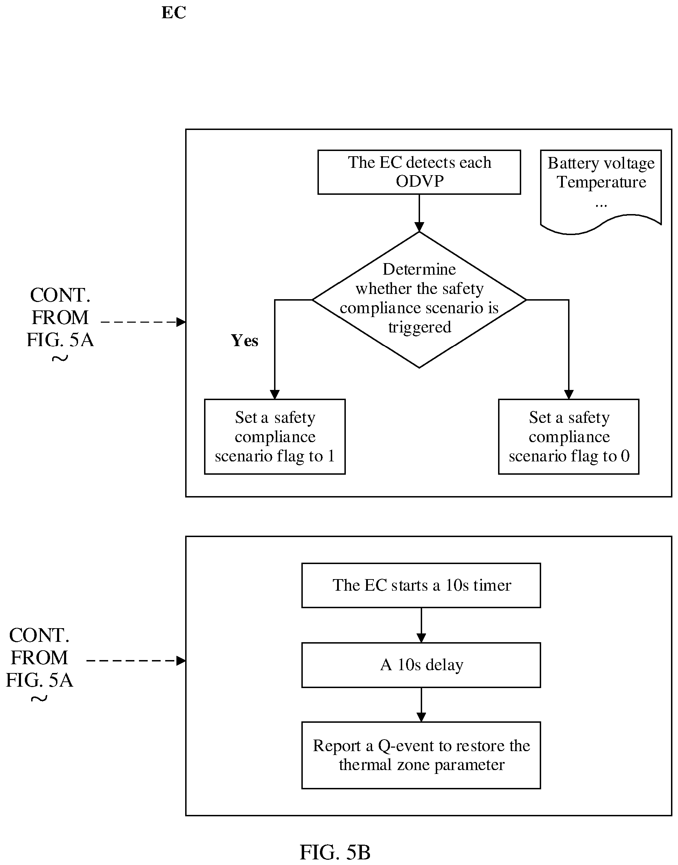

FIG. 5A and FIG. 5B are a flowchart of BIOS and EC processing according to an embodiment of this application.

As shown in FIG. 5A and FIG. 5B, when the Windows operating system invokes the WMI frequency boosting interface to notify the BIOS, the BIOS obtains, from the EC side through BIOS EC communication, whether to trigger the safety compliance scenario.

Further, when receiving the obtaining instruction sent by the BIOS, the EC: detects each safety compliance parameter, where the safety compliance parameter may be an original design variable parameter (ODM Design Variables Parameter, ODVP); determines, based on each ODVP, whether to trigger the safety compliance scenario; sets a safety compliance scenario flag to 1 when determining that the safety compliance scenario is currently triggered; or sets a safety compliance scenario flag to 0 when determining that the safety compliance scenario is not currently triggered; and sends the safety compliance scenario flag to the BIOS.

The safety compliance parameter may be a battery voltage, a temperature, or the like. For example, the EC may compare the safety compliance parameter such as the battery voltage or the temperature with the preset range of each safety compliance parameter, to determine whether the safety compliance scenario is currently triggered.

In this case, when receiving a safety compliance scenario flag of 1, the BIOS may determine that the safety compliance scenario is currently triggered, and end an operation. It should be understood that before a frequency is boosted, the BIOS specifically obtains, from the EC, whether the safety compliance scenario is currently triggered. If the BIOS determines that the safety compliance scenario has been triggered, an operation of disabling thermal control does not need to be performed, so that a safety accident can be avoided.

When receiving a safety compliance scenario flag of 0, the BIOS may determine that the safety compliance scenario is not triggered currently, and modify the thermal zone parameter. After the thermal zone parameter is modified, the BIOS notifies, through BIOS EC communication, the EC to prepare to restore the thermal zone parameter.

When receiving, from the BIOS, a parameter that requires restoration of the thermal zone parameter, the EC may start a 10s timer. After 10s, the EC reports a Q-event to restore the thermal zone parameter.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effects.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application. Any modification, equivalent substitution, and improvement made according to the disclosure of this application shall fall within the protection scope of this application.

## Claims

1. A frequency control method for a processor, wherein the method comprises:
identifying, by an electronic device, an operating status of a processor of the electronic device when detecting a user operation that indicates to start a first application, wherein the operating status comprises a frequency reducing state and a frequency boosting state; and
adjusting, by the electronic device, the operating status of the processor to the frequency boosting state when the operating status of the processor is the frequency reducing state.

2. The method according to claim 1, wherein the method further comprises:
executing, by the electronic device, a temperature control policy, wherein the temperature control policy comprises a thermal zone parameter, and the temperature control policy is to adjust the operating status of the processor to the frequency reducing state when a thermal zone temperature of the processor reaches the thermal zone parameter; and
adjusting the operating status of the processor to the frequency boosting state comprises: adjusting, by the electronic device, a value of the thermal zone parameter from a first threshold to a second threshold, wherein the second threshold is greater than the first threshold; and adjusting, by the electronic device, the operating status of the processor to the frequency boosting state when detecting that the thermal zone parameter is adjusted to the second threshold.

3. The method according to claim 2, wherein the value of the thermal zone parameter is adjusted by using a basic input/output system BIOS in the electronic device.

4. The method according to claim 3, wherein before adjusting the value of the thermal zone parameter from the first threshold to the second threshold, the method further comprises:
sending, by the electronic device, a first notification to the BIOS through a frequency boosting interface when detecting the user operation by using a second application, wherein the first notification indicates an advanced configuration and power interface ACPI in the BIOS to adjust the thermal zone parameter.

5. The method according to any one of claims 1 to 4, wherein the operating status of the processor is adjusted by using a temperature control driver in the electronic device.

6. The method according to any one of claims 2 to 5, wherein after adjusting the operating status of the processor to the frequency boosting state, the method further comprises:
adjusting, by the electronic device, the value of the thermal zone parameter from the second threshold to the first threshold after a preset time.

7. The method according to claim 6, wherein adjusting, by the electronic device, the value of the thermal zone parameter from the second threshold to the first threshold after the preset time comprises:
sending, by the electronic device, a second notification to an embedded controller EC by using the BIOS when adjusting the value of the thermal zone parameter from the first threshold to the second threshold, wherein the second notification comprises the preset time, and the second notification indicates the EC to adjust the thermal zone parameter from the second threshold to the first threshold after the preset time;
sending, by the electronic device, an instruction to the BIOS by using the EC after the preset time, wherein the instruction indicates the BIOS to adjust the thermal zone parameter from the second threshold to the first threshold; and
reducing, by the electronic device, an operating frequency of the processor when detecting, by using the temperature control driver, that the thermal zone parameter is adjusted to the first threshold.

8. The method according to any one of claims 1 to 7, wherein adjusting the operating status of the processor to the frequency boosting state comprises:
adjusting, by the electronic device, the operating status of the processor to the frequency boosting state when detecting that a safety compliance parameter of the electronic device is within a preset range, wherein the safety compliance parameter comprises at least one of a battery voltage and a temperature.

9. The method according to claim 8, wherein the method further comprises:
obtaining, by the electronic device, a safety compliance scenario identifier from the EC by using the BIOS after the BIOS receives a third notification, wherein the third notification indicates the BIOS to adjust the thermal zone parameter; and
determining, by the electronic device, that the safety compliance parameter of the electronic device is within the preset range when determining, by using the BIOS, that the safety compliance scenario identifier is a preset identifier.

10. The method according to any one of claims 1 to 9, wherein an operating frequency that is of the processor and that is occupied when the first application is running is higher than a preset frequency.

11. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 10.

12. A computer program product, comprising instructions, wherein when the computer program product runs on an electronic device, the electronic device is enabled to perform the method according to any one of claims 1 to 10.

13. A computer-readable storage medium, comprising instructions, wherein when the instructions are run on an electronic device, the electronic device is enabled to perform the method according to any one of claims 1 to 10.
